Europäisches Patentamt

European Patent Office

Office européen des brevets

(11) Numéro de publication: **0 238 392**
**A1**

## (12) DEMANDE DE BREVET EUROPEEN

(21) Numéro de dépôt: **87400509.3**

(22) Date de dépôt: **09.03.87**

(51) Int. Cl.⁴: **F 24 F 6/14**
**// B01D45/08**

(30) Priorité: **10.03.86 FR 8603347**

(43) Date de publication de la demande:
**23.09.87 Bulletin 87/39**

(84) Etats contractants désignés:
**BE CH DE ES FR GB IT LI LU NL**

(71) Demandeur: **Erisse, Emile**
**L'Onglée Saint Aubin du Plain**
**F-79300 Bressuire (FR)**

(72) Inventeur: **Erisse, Emile**
**L'Onglée Saint Aubin du Plain**
**F-79300 Bressuire (FR)**

(74) Mandataire: **Thibon-Littaye, Annick**
**Cabinet A. THIBON-LITTAYE 11 rue de l'Etang**
**F-78160 Marly-le-Roi (FR)**

(54) Dispositif d'humidification d'air ambiant.

(57) L'invention concerne les matériels utilisés pour humidifier l'air ambiant. notamment dans les locaux industriels.

Une chambre de mélange (2) et une chambre de séparation (3) sont ménagées à l'intérieur d'un caisson (1), un ventilateur (5) permet de faire circuler l'air ambiant successivement à travers la chambre de mélange (2) et la chambre de séparation (3), tandis qu'une pompe (6) permet de prélever de l'eau dans un bac de réserve formé en fond de la chambre de mélange (2) pour la renvoyer par des gicleurs de pulvérisation en partie haute de cette chambre. La chambre de mélange (2) présente en section une forme générale triangulaire, avec un fond incliné vers lequel l'eau pulvérisée est projetée.

FIG-1

EP 0 238 392 A1

**Description**

## DISPOSITIF D'HUMIDIFICATION D'AIR AMBIANT

La présente invention concerne les matériels utilisés pour humidifier l'air d'une atmosphère ambiante à taux d'humidité jugé insuffisant, et plus particulièrement ceux qui sont destinés à l'humidification de locaux industriels dans les pays à climat chaud et sec ou à l'humidification d'installations industrielles qui demandent un degré hygrométrique maintenu avec une grande précision.

Elle a pour objet un dispositif d'humidification d'air ambient qui est conçu pour assurer une humidification efficace optimale pour une consommation d'eau réduite, sous une construction simple et robuste et d'une grande sécurité de fonctionnement.

Ce dispositif se caractérise en ce qu'il comporte des moyens de circulation d'air ambiant à travers une chambre de mélange présentant un bac de réserve d'eau et une chambre de séparation surmontant ladite chambre de mélange et un ensemble de baffles disposées dans ladite chambre de séparation pour séparer, de l'air en circulation, l'eau entraînée avec lui et la renvoyer dans la chambre de mélange, en ce que la chambre de mélange et la chambre de séparation sont intégrées dans un caisson, muni de moyens d'appui en position horizontale, en ce que ladite chambre de mélange présente en section une forme générale triangulaire, limitée par une paroi verticale arrière, un fond incliné vers le bas d'avant en arrière vers ledit bac de réserve d'eau et une cloison intermédiaire la séparant de la chambre de séparation et comportant une partie inférieure formée par un tamis perforé de communication entre les deux chambres et une partie supérieure non perforée constituant un plafond pour la chambre de mélange, et en ce que lesdits moyens de circulation comportent un ventilateur d'admission à travers une ouverture de ladite paroi verticale arrière et un circuit d'eau comportant une pompe pour prélever de l'eau dans ledit bac de réserve d'eau et pour renvoyer l'eau prélevée dans le chambre de mélange, sous ledit plafond, en la projetant sous forme pulvérisée en direction dudit fond incliné, au moins vers une partie supérieure de celui-ci.

De préférence, la chambre de séparation est également de forme triangulaire, au moins en partie, et limitée par une paroi verticale avant du caisson. La sortie de l'air humidifié, débarrassé de toute eau entraînée, peut avantageusement s'effectuer par une large ouverture du caisson ménagée vers le haut ou vers l'avant.

Les conditions de fonctionnement du dispositif d'humidification ainsi conçu sont excellentes de plusieurs points de vue. La projection de l'eau pulvérisée vers le fond incliné de la chambre de mélange provoque un éclatement des gouttes d'eau qui permet d'augmenter la proportion d'eau se trouvant vaporisée dans l'air en circulation. La section de passage de l'air se dirigeant vers la chambre de séparation est étranglée dans cette partie de la chambre de mélange où la densité de surface de contact avec l'eau est particulièrement importante. Toute l'eau qui n'est pas véritablement utilisée pour l'humidification de l'air, y compris celle qui est entraînée dans la chambre de séparation, est renvoyée par l'ensemble de baffles, revient facilement et directement dans le bac de réserve d'eau pour être recirculée.

Par ailleurs le dispositif suivant l'invention est particulièrement simple et robuste. Le ventilateur et la pompe peuvent avantageusement être rendus aisément accessibles en étant réunis, avec un appareillage de commande, de régulation et de sécurité, derrière la paroi verticale arrière du caisson, sous un capot protecteur amovible.

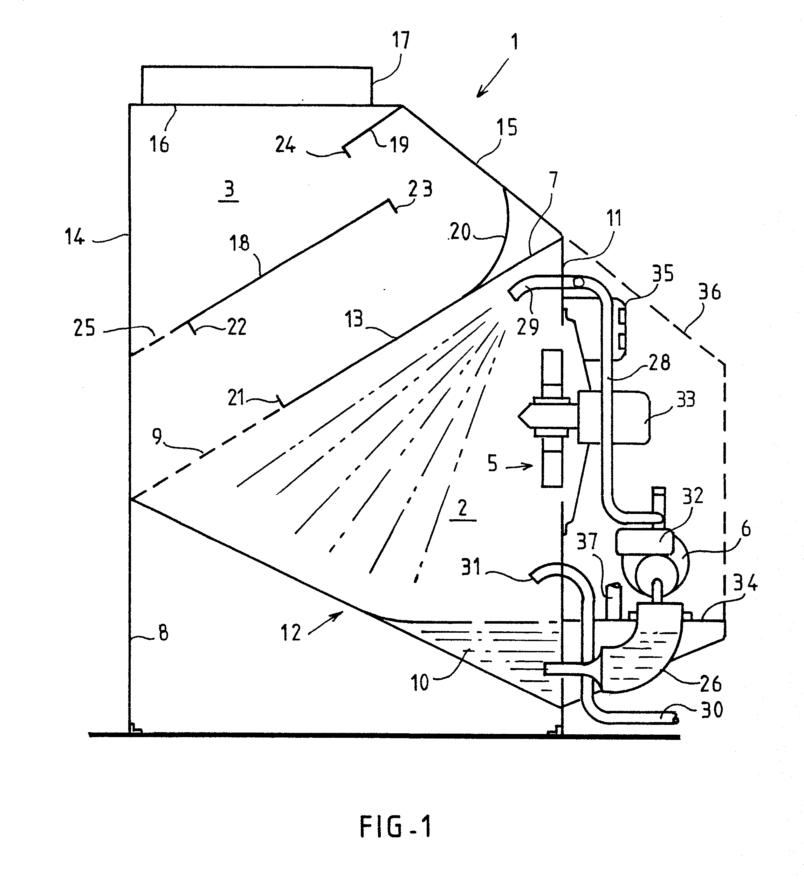

Le dispositif suivant l'invention peut encore présenter d'autres caractéristiques avantageuses qui ressortiront ci-après, dans le cadre de la description d'un mode de réalisation particulier, lequel n'est nullement limitatif. Cette description fait référence aux figures 1, 2 et 3 des dessins annexés dans lesquels :

- la figure 1 représente schématiquement le dispositif décrit dans une vue en élévation en coupe verticale partielle ;
- la figure 2 représente schématiquement une vue de dessus du même dispositif ;
- la figure 3 représente schématiquement une variante du dispositif de la figure 1.

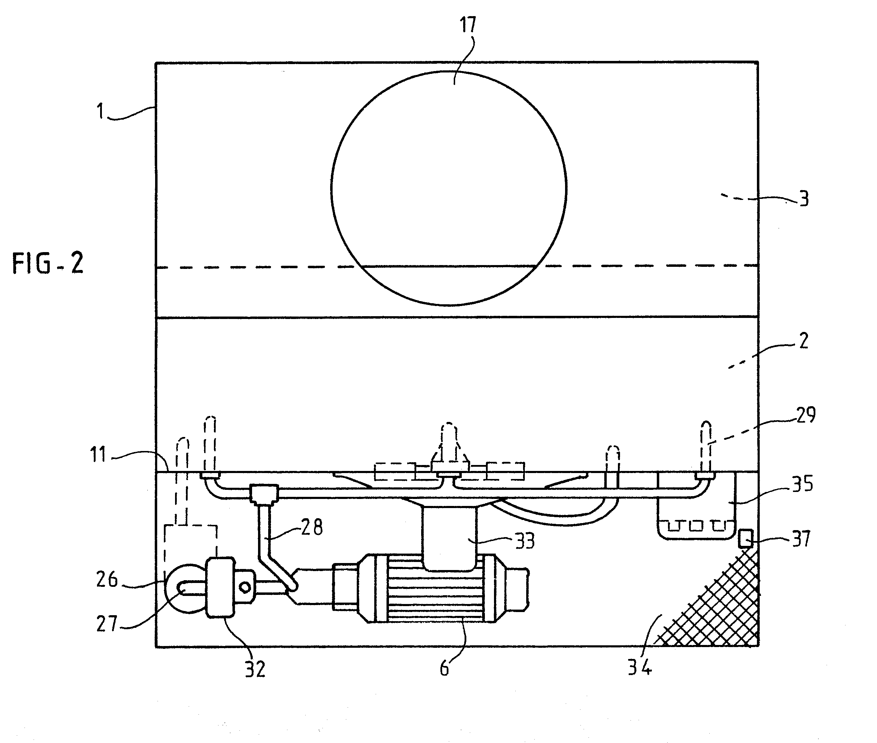

Le dispositif tel qu'illustré par les figures 1 et 2 est essentiellement constitué par un caisson 1, dans lequel sont ménagées deux chambres séparées par une cloison intermédiaire 7, par un ventilateur de circulation d'air 5 et par une pompe de circulation d'eau 6. Son rôle est d'assurer l'humidification de l'air par mise en contact avec de l'eau pulvérisée. Les deux chambres du caisson 1 comprennent une chambre de mélange 2 où s'effectue cette mise en contact entre l'air et l'eau et une chambre de séparation 3 qui a pour fonction de séparer les gouttelettes d'eau qui se trouvent entraînées avec l'air à la sortie de la chambre de mélange.

Comme on le voit sur la figure 1, le caisson 1 est solidaire d'une structure porteuse qui est illustrée par des pieds d'appui au sol 8, par lesquels le dispositif repose en fonctionnement en position horizontale. Dans cette position, la chambre de séparation 3 surmonte la chambre de mélange 2. Elles communiquent entre elles par un tamis perforé 9. Le fond de la chambre de mélange 2 constitue un bac de réserve d'eau 10.

La chambre de mélange 2 présente en section, comme le montre la figure 1, une forme générale triangulaire. C'est là une particularité caractéristique de l'invention. La base du triangle est une paroi verticale 11 du caisson qui limite à l'arrière la chambre de mélange 2. Cette paroi est percée d'une large ouverture en travers de laquelle est disposé le ventilateur 5 de manière à admettre par-là, dans la chambre de mélange, de l'air prélevé de l'atmosphère ambiante. Suivante le côté inférieur du triangle, une tôle du caisson 1 forme à la chambre de mélange 2 un fond 12 incliné vers le bas d'avant en arrière. Suivant le côté supérieur, on trouve la cloison intermédiaire 7, inclinée vers le haut d'avant en arrière. Cette cloison 7 comporte en partie inférieure le tamis perforé 9, et en partie supérieure une tôle non perforée qui constitue un plafond 13 pour la chambre de mélange.

La même cloison intermédiaire 7 constitue également le fond de la chambre de séparation 3. Celle-ci présente, du moins en partie, une section de forme triangulaire tournée à l'opposé de celle de la chambre de mélange. La chambre de séparation 3 est ainsi limitée vers l'avant par une paroi verticale 14 du caisson, et vers l'arrière par un plafond 15 incliné vers le bas jusqu'à l'extrémité supérieure de la cloison 7. A son extrémité supérieure, le caisson 1 est fermé par un couvercle horizontal 16 dans lequel est pratiquée une large ouverture circulaire, bordée par une virole 17. Le plafond incliné 15 rejoint le couvercle horizontal 16, sensiblement au bord de cette ouverture.

A l'intérieur du caisson, la chambre de séparation 3 renferme un ensemble de baffles qui comportent essentiellement une grande plaque 18 et une petite plaque 19. Ces plaques sont décalées l'une par rapport à l'autre en chicane et toutes deux inclinées dans le même sens que la cloison intermédiaire 7. La grande plaque 18 monte à partir de la paroi verticale avant 14, tandis qu'au-dessus d'elle, la petite plaque 19 descend de l'extrémité supérieure du plafond incliné 15. La disposition est telle que la section de passage offerte à l'air reste en permanence très large depuis le tamis 9 jusqu'à l'ouverture supérieure de sortie. La circulation de l'air n'est donc pratiquement pas perturbée. Une tôle courbée 20 reliant le plafond 15 à la cloison intermédiaire 7 évite les turbulences qui pourraient apparaître dans l'angle. On remarquera en outre, sur la figure 1, que la cloison intermédiaire 7 à son extrémité inférieure, la grande plaque 18 en ses extrémités inférieure et supérieure et la petite plaque 19 en son extrémité inférieure, comportent des rebords référencés 21,22,23 et 24 respectivement, qui servent à arrêter l'eau éventuellement entraînée avec l'air, de manière à obtenir finalement à la sortie du caisson, de l'air effectivement humidifié, mais totalement exempt d'eau condensée. Le retour de l'eau vers le bas du dispositif peut s'effectuer à travers des trous 25 percés à cet effet, à travers la plaque 18, près de la paroi 14, et bien entendu ensuite, à travers le tamis 9.

Le circuit de l'eau au niveau de la chambre de mélange 2 se comprend à l'examen des figures 1 et 2.

Derrière la paroi verticale 11, en dehors du caisson, se trouve un tube coudé 26, dont un prolongement traverse la paroi 11 pour déboucher dans le bac de réserve d'eau 10 formé par des parties inférieures de la paroi verticale 11 et du fond incliné 12, directement dans le bas de la chambre de mélange 2. Dans ce tube 26, la pompe 6 aspire l'eau par l'intermédiaire d'une crépine 27. Elle la refoule par des canalisations 28 encore extérieures au caisson jusqu'à trois gicleurs 29 qui sont disposés dans l'angle supérieur à l'intérieur de la chambre de mélange 2. Ces gicleurs sont orientés de manière à projeter de l'eau pulvérisée en direction du fond incliné 12, dans sa partie supérieure au-dessus du bac de réserve d'eau 10. Lorsque le dispositif est en fonctionnement, on trouve là en fait un film continu d'eau, qui est principalement dû à l'effet du ventilateur d'air. Quand la surface libre de la réserve d'eau s'abaisse à un niveau prédéterminé, mesuré par un flotteur non représenté, un tuyau d'alimentation 30, pénétrant dans la chambre de mélange 2 en 31, permet de remplir le bac 10 à nouveau. La commande de ce remplissage est automatiquement assurée par un dispositif de régulation en lui-même classique. En sécurité, un contacteur manométrique 32 détermine l'arrêt de la pompe en cas d'absence d'eau. Il peut également commander l'arrêt du ventilateur 5, dont on a représenté le moteur d'entraînement en 33.

Du point de vue de la construction mécanique, on remarquera que le ventilateur 5 avec son moteur 33 est entièrement porté par la paroi verticale 11, tandis que la pompe 6 est montée avec ses organes auxiliaires sur un plancher horizontal 34, fixé à l'arrière du caisson. Un boîtier de raccordement 35 est également fixé sur la paroi verticale 11 derrière le caisson. Il fait partie de l'appareillage de commande, de régulation et de sécurité, et il permet le raccordement à des moyens d'alimentation électrique extérieurs. Cet appareillage, le ventilateur 5 avec son moteur 33, la pompe 6, les canalisations 28 et les autres matériels montés derrière la paroi 11 du caisson sont normalement protégés par un capot 36, matérialisé en traits interrompus sur la figure 1. Ce capot est amovible. Il comporte une paroi grillagée permettant le libre passage de l'air aspiré par le ventilateur. Un détecteur par contact 37 permet de commander automatiquement l'arrêt du fonctionnement du dispositif quand il ne décèle plus la présence du capot 36.

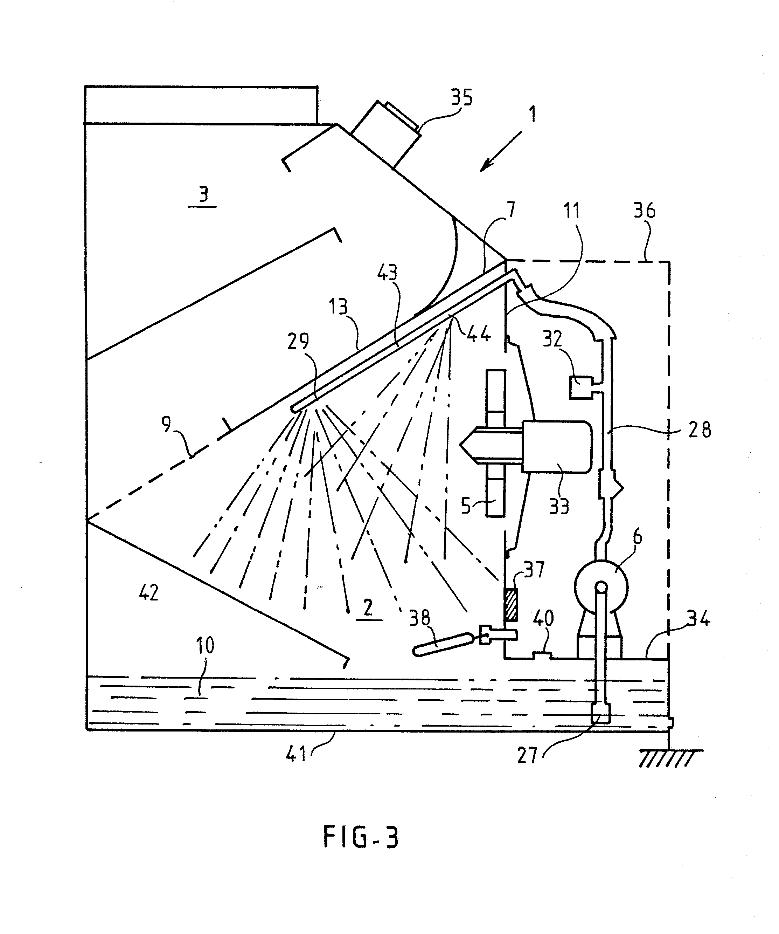

Dans la variante de la figure 3, on retrouve avec les mêmes chiffres de référence, la chambre de mélange 2 et la chambre de séparation 3, toutes deux intégrées dans le caisson 1, posé sur le sol en position horizontale, avec la cloison intermédiaire inclinée 7 qui les sépare, dans laquelle on distingue le plafond 13 de la chambre de mélange et le tamis 9 assurant la communication entre les deux chambres.

On retrouve également la forme triangulaire de la chambre de mélange et la paroi arrière verticale 11 qui supporte le ventilateur 5 entraîné par le moteur 33, ainsi que le circuit d'eau comprenant la pompe 6, avec la crépine 27 d'aspiration dans le bac de réserve d'eau 10, les canalisations 28, le contacteur monométrique 32, et le capot de protection 36. On remarque par contre que le boîtier de raccordement 35 est différemment disposé, hors du capot 36. Par ailleurs, le détecteur par contact 37 est monté sur la paroi verticale 11.

Cette variante illustrée par la figure 3 diffère surtout de la précédente par le fait que le bac de réserve d'eau 10 est de volume beaucoup plus important et qu'il occupe toute la partie inférieure du caisson sur un fond 41 qui le ferme. Ce bac s'étend jusque sous le plancher 34 qui supporte la pompe 6, et c'est là que se trouve la crépine 27. Sur ce plancher 40, on voit d'autre part un orifice de remplissage du bac, fermé par un bouchon 40.

La chambre de mélange 2 reste limitée par un fond incliné 42 analogue au fond 12 de la figure 1, mais ce fond est distinct de celui du bac de réserve d'eau. Au niveau de l'ouverture d'accès au bac 10 se trouvent des volets 38 qui tendent à renvoyer les gouttelettes d'eau qui peuvent tomber dessus vers la chambre de mélange.

Enfin, les canalisations 28 se prolongent dans la chambre de mélange par des rampes 43 qui descendent le long du plafond 13 formé par la cloison 7, et qui comportent deux séries parallèles de gicleurs 29 et 44, situés à des niveaux horizontaux différents sous ce plafond. Les jets des gicleurs restent principalement orientés vers le fond incliné 42, dans une disposition qui a toutefois l'avantage de provoquer des collisions supplémentaires entre les gouttelettes de jets différents.

Naturellement, l'invention n'est en rien limitée par les particularités qui ont été spécifiées dans ce qui précède ou par les détails du mode de réalisation particulier choisi pour illustrer l'invention. Toutes sortes de variantes peuvent être apportées à la réalisation particulière qui a été décrite à titre d'exemple et à ses éléments constitutifs sans sortir pour autant du cadre de l'invention. Cette dernière englobe ainsi tous les moyens constituant des équivalents techniques des moyens décrits ainsi que leurs combinaisons.

Suivant l'une de ces variantes l'ouverture de sortie d'air peut être prévus à travers la paroi avant 14 des figures plutôt qu'à travers le couvercle supérieur 16.

## Revendications

1. Dispositif d'humidification d'air ambiant comportant des moyens de circulation d'air ambiant à travers une chambre de mélange (2) présentant un bac de réserve d'eau (10) et une chambre de séparation (3) surmontant ladite chambre de mélange (2) et un ensemble de baffles disposées dans ladite chambre de séparation pour séparer, de l'air en circulation, l'eau entraînée avec lui et la renvoyer dans la chambre de mélange (2), caractérisé en ce que la chambre de mélange (2) et la chambre de séparation (3) sont intégrées dans un caisson (1), muni de moyens (8) d'appui en position horizontale, en ce que ladite chambre de mélange (2) présente en section une forme générale triangulaire, limitée par une paroi verticale arrière (11), un fond (12) incliné vers le bas d'avant en arrière vers ledit bac de réserve d'eau (10) et une cloison intermédiaire (7) la séparant de la chambre de séparation et comportant une partie inférieure formée par un tamis perforé de communication entre les deux chambres (9) et une partie supérieure non perforée constituant un plafond (13) pour la chambre de mélange, et en ce que lesdits moyens de circulation comportent un ventilateur (5) d'admission à travers une ouverture de ladite paroi verticale arrière et un circuit d'eau comportant une pompe (6) pour prélever de l'eau dans ledit bac de réserve d'eau (10) et pour renvoyer l'eau prélevée dans la chambre de mélange, sous ledit plafond, en la projetant sous forme pulvérisée en direction dudit fond incliné (12), au moins vers une partie supérieure de celui-ci.

2. Dispositif suivant la revendication 1, caractérisé en ce qu'il comporte un appareillage de commande, de régulation et de sécurité, monté à l'extérieur dudit caisson (1) derrière ladite paroi verticale arrière (11).

3. Dispositif suivant la revendication 1 ou 2, caractérisé en ce qu'il comporte un plancher support (34) pour ladite pompe (6), disposé vers l'extérieur dudit caisson (1) derrière ladite paroi verticale arrière (11).

4. Dispositif suivant les revendications 1, 2 et 3, considérées ensemble, caractérisé en ce qu'il comporte un capot protecteur (36) pour ladite pompe (6), ledit appareillage et un moteur (33) d'entraînement dudit ventilateur, ledit capot étant amovible.

5. Dispositif suivant l'une quelconque des revendications 1 à 4, caractérisé en ce qu'en limitation de ladite chambre de séparation (3), le caisson comporte une paroi verticale avant (14) et un plafond (15) incliné vers le bas depuis une ouverture d'évacuation d'air jusqu'à ladite paroi verticale arrière (11).

6. Dispositif suivant l'une quelconque des revendications 1 à 5 caractérisé en ce que ledit ensemble de baffles comporte des plaques (18,19) décalées en chicanes, inclinées dans le même sens que ladite cloison intermédiaire (7).

7. Dispositif suivant l'une quelconque des revendications 1 à 6, caractérisé en ce que ladit bac (10) occupe une partie inférieure horizontale du caisson, sous ladite chambre de mélange (2) et en ce qu'il s'étend sous ledit fond (12) de cette chambre et sous un plancher (34) supportant ladite pompe (6) derrière ladite paroi verticale arrière (11).

8. Dispositif selon l'une quelconque des revendications 1 à 7, caractérisé en ce qu'il comporte deux séries de gicleurs (29,44) de projection d'eau dans la chambre de mélange, situés à des niveaux horizontaux différents sous ledit plafond (13).

0238392

FIG-1

FIG-2

1

17

3

2

29

11

35

28

33

26

27

32

6

34

37

0238392

0238392

FIG-3

Office européen
des brevets

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.⁴) |
|---|---|---|---|
| Y | DE-C- 930 950 (KRANTZ) <br> * En entier * | 1 | F 24 F 6/14 // <br> B 01 D 45/08 |
| | --- | | |
| Y | US-A-2 448 297 (CHRISTENSEN) <br> * Colonne 4, lignes 68-71; figure 5 * | 1 | |
| A | | 6 | |
| | --- | | |
| A | FR-A- 698 888 (BROWN, BOVERI & CO.) <br> * Page 1, lignes 8-21; figures * | 1,2 | |
| | --- | | |
| A | FR-A-1 135 180 (SULZER) <br> * Figure * | 1-3 | |
| | --- | | **DOMAINES TECHNIQUES RECHERCHES (Int. Cl.⁴)** |
| A | US-A-2 353 233 (GYGAX) <br> * Figure * | 1 | F 24 F <br> B 05 B <br> B 01 D |
| | --- | | |
| A | US-A-1 925 907 (NORRIS) <br> * Figure 9 * | 4 | |
| | --- | | |
| A | US-A-2 723 725 (KEIFFER) <br> * Colonne 3, lignes 62-68; fig-ures * | 6 | |
| | ----- | | |

Le présent rapport de recherche a été établi pour toutes les revendications

| Lieu de la recherche | Date d'achèvement de la recherche | Examinateur |
|---|---|---|
| LA HAYE | 25-05-1987 | BORRELLI R.M.G.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur. mais publié à la date de dépôt ou après cette date
D : cité dans la demande
L : cité pour d'autres raisons

& : membre de la même famille, document correspondant

OEB Form 1503 03 82